Europäisches Patentamt

European Patent Office

Office européen des brevets

(11) Publication number: **0 152 787**
**B1**

(12) **EUROPEAN PATENT SPECIFICATION**

(45) Date of publication of patent specification: **26.04.89**

(51) Int. Cl.⁴: **C 08 J 9/14, C 08 L 23/02**

(21) Application number: **85100656.9**

(22) Date of filing: **23.01.85**

(54) **Improved process for producing dimensionally stable polyolefin foams using environmentally acceptable blowing agent systems.**

(30) Priority: **31.01.84 US 575627**

(43) Date of publication of application:
**28.08.85 Bulletin 85/35**

(45) Publication of the grant of the patent:
**26.04.89 Bulletin 89/17**

(84) Designated Contracting States:
**BE DE FR GB IT NL**

(56) References cited:
**EP-A-0 041 167**
**WO-A-80/01889**
**FR-A-2 340 342**
**FR-A-2 342 314**
**GB-A-1 210 626**

(73) Proprietor: **THE DOW CHEMICAL COMPANY**
**2030 Dow Center Abbott Road P.O. Box 1967**
**Midland Michigan 48640-1967 (US)**

(72) Inventor: **Park, Chung Poo**
**8762 Stoneridge Court**
**Pickerington Ohio 43147 (US)**

(74) Representative: **Casalonga, Alain et al**
**BUREAU D.A. CASALONGA OFFICE JOSSE &**
**PETIT Morassistrasse 8**
**D-8000 München 5 (DE)**

**The file contains technical information submitted after the application was filed and not included in this specification**

Courier Press, Leamington Spa, England.

# EP 0 152 787 B1

**Description**

It is well known to prepare olefin polymer foams by heat plastifying a normally solid olefin polymer resin, admixing such heat plastified resin with a volatile blowing agent under heat and pressure to form a flowable gel and thereafter extruding the gel into a zone of lower pressure and temperature to expand and cool the gel to form the desired solid olefin foam product.

A problem frequently encountered is preventing an unacceptable degree of shrinkage of the partially cured foam during the aging or curing period following extrusion. During this period, the blowing agent employed is gradually diffusing out of the cells in the foam product and air is gradually diffusing into the cells in place thereof. For example, U.S. Patent 4,347,329 teaches that a blowing agent such as dichlorodifluoromethane can be used mixed with other volatile halogenated hydrocarbons and a stability agent to produce low density (e.g., 16 to 96 $kg/m^3$ foams of ethylenic polymer resins. Other similar technology for preparing dimensionally stable foams is disclosed in (U.S. Patent No. 3,644,230 and Watanabe et al., U.S. Patent No. 4,214,054. These techniques, however, limit the maximum cross-section of the foam articles which can be obtained from a given type of extrusion apparatus. Moreover, changes of volatile blowing agents and mixtures with and without stability control modifiers affect the foam product in a variety of undeterminable ways.

FR—A—2 342 314 teaches the use as blowing agent of a binary mixture, selected from group I and II of halogenated hydrocarbons. The group II halogenated hydrocarbons are all fully halogenated hydrocarbons.

FR—A—2 340 342 discloses in Example 23 a 1:1 mixture of ethylchloride and CFC 142b to produce a low thermal conductivity polystyrene foam. Ordinarily, a blowing agent suitable for polystyrene is not necessarily suitable for polyethylene.

Since the 1950's, rapid advancement in chemical analytical techniques has led to a large amount of knowledge concerning atmospheric composition. The blowing agents used in the production of these low density foams are largely, if not entirely, fluorocarbons. Yet saturated chlorofluorocarbons are suspected of destroying the earth's protective ozone layer by migrating up through the troposphere to the stratosphere and catalyzing ozonedestroying chain reactions. Because these compounds are so stable, they survive in the troposphere extending from Earth's surface to an altitude of 16 to 26 km. The need exists for development and use of less stable volatile blowing agents which have a shorter atmospheric, half-life, thereby reducing the potential for environmental damage.

This invention accomplishes such an improvement by producing a dimensionally stable ethylenic polymer foam in desired plank size using a more environmentally acceptable blowing agent.

## Summary of the invention

In accordance with the present invention, there is provided a process for preparing closed-cell olefin polymer foam articles having increaseed maximum achievable cross-sectional areas on a given type or size of extrusion apparatus and good dimensional stability. Along with these benefits, an expandable olefin polymer composition is produced in an environmentally safer way.

Said process according to this invention comprises the steps of:

(A) heat plastifying a normally solid olefin polymer resin;

(B) admixing said heat plastified resin under elevated temperature and pressure with

(1) a stability control agent and

(2) a mixed blowing agent system selected from (a) or (b) or (c);

(a) from 50 to 95 weight percent of 1-chloro-1,1-difluoroethane and from 5 to 50 weight percent of an aliphatic hydrocarbon composition or a halogenated hydrocarbon composition or a mixture thereof such aliphatic and/or halogenated hydrocarbon composition(s) having a normal atmospheric boiling point of from 0°C to 50°C, the system having a saturated vapor pressure of 1667.1—2059.4 kPa (17 to 21 $kg/cm^2$) at 100°C;

(b) from 50 to 95 weight percent of 1,1-difluoroethane and from 5 to 50 weight percent of an aliphatic hydrocarbon composition or halogenated hydrocarbon compositions or a mixture thereof such aliphatic and/or halogenated hydrocarbon composition(s) having a normal atmospheric boiling point of from 0°C to 50°C, the system having a saturated vapor pressure of 2353.6—3138.1 kPa (24 to 32 $kg/cm^2$) at 100°C;

(c) a mixture of (a) and (b); the weight percentages of the components in the mixed blowing agent systems being based on the total weight of the mixed blowing agent system;

(c) extruding the resultant resin, stability control agent and blowing agent mixture into a zone of lower temperature and pressure; and

(D) cooling the mixture to form an olefin polymer foam.

## Description

The improved process is particularly well suited for the preparation of closed-cell olefin polymer foamed articles of relatively low density, e.g., from 16 to 96 $kg/m^3$ and especially from 16 to 48 $kg/m^3$ having relatively small or fine cell size and relatively large cross-sectional area(s) (e.g., cross-sectional areas in excess of about 310 $cm^2$ taken in a plane perpendicular to the direction of extrusion). In addition, this process permits the preparation of such articles without excessive shrinkage during the manufacture

2

and/or storage of the fresh foam. The resulting foamed articles have (in fresh foam form) relatively good dimensional stability in ambient temperatures (e.g., 21°C, 70°F), typically shrinking to no less than 80 (preferably less than 85 and most preferably less than 90) percent of their initial foamed volume under such manufacturing and/or storage condition.

This process also has the additional advantage of using blowing agent mixture(s) that are less stable and have a shorter atmospheric half-life than chlorofluorocarbons previously used. While the fluorocarbons used according to the present invention are considered to be environmentally acceptable, not all fluorocarbons produce an acceptable foaming process. It is necessary to incorporate a stability contorl agent to make extrusion foaming easier, environmentally safe and cost effective, while maintaining foam dimensional stability.

Olefin polymer resins suitably used in the practice of the present invention include ethylene homopolymers such as low, medium or high density polyethylene, ethylene copolymers such as ethylene-vinyl acetate copolymers, ethylene-propylene copolymers, ethylene-1-butane copolymers, ethylene-butadiene copolymers, ethylene-vinyl chloride copolymers, ethylenemethyl methacrylate copolymers, ethylene-acrylonitrile copolymers, and ethylene-acrylic acid copolymers. As the olefin polymer resin, it is preferable to use an ethylene homopolymer or a copolymer having an ethylene content above 50 percent by weight, preferably above 75 percent by weight. Naturally, blends of two or more of such olefin polymer resins can be suitbly employed.

Stability control agents suitable for use herein include the long-chain fatty acid/polyol partial esters described in U.S. Patent No. 3,644,230 as well as higher alkyl amines, fatty acid amides and complete esters of higher fatty acids such as described in Watanabe et al., U.S. Patent No. 4,214,054. Typically, such stability control additives are employed in an amount ranging from 0.1 to 10 weight percent based on weight of olefin polymer and preferably from 0.5 to 5 weight percent.

Also included as stability control agents suitable for use herein are an alkyl substituted amide of an unsaturated fatty acid or an alkenyl substituted amide of a saturated fatty acid. Typically, these stability additives are employed in the same amounts as above, from 0.1 to 10 weight percent, preferably 0.2 to 5 weight percent.

Other suitable stability control agents include the copolymers of α-olefins with various monoethylenically unsaturated carboxylic acids such as, for example, copolymers containing a major portion of ethylene copolymerized with a minor proportion of a monoethylenically unsaturated carboxylic acid such as acrylic acid, methacrylic acid and the like. Preferred carboxyl-bearing copolymers for such premeability modification include ethylene-acrylic acid copolymers having from 3 to 45, preferably from 15 to 45, weight percent of acrylic acid copolymerized therein. When such carboxyl-containing copolymers are used, the amount used is not particularly critical so long as sufficient is employed to impart the desired dimensional stability to the olefin polymer foam product. However, as a general rule: (a) when the carboxyl-containing polymer contains relatively lower proportions of acid monomer (e.g., from 3 to 15 weight percent based on copolymer it will typically be employed in relatively larger proportions (e.g., from 40 to 90 weight percent of the total polymer solids), and (b) when such carboxyl-polymer contains higher levels of carboxylic acid monomer therein (e.g., from 15 to 45 weight percent) then such carboxyl-containing polymer will typically be used in the range of from 15 to 40 weight percent of the total polymer used in the extrusion foaming process. Naturally, when the olefin polymer to be foamed itself functions as a stability control agent (e.g., copolymers of ethylene and monoethylenically unsaturated carboxylic acid such as acrylic acid, etc.), the addition of a further stability control agent as a separate additional ingredient is not necessary since the copolymer performs the dual function of being both the structural polymer and stability control agent.

As has been noted, an important feature of the present invention is the use of a mixed blowing system consisting of 1-chloro-1,1-difluoroethane (also referred to as FC-142b) and/or 1,1-difluoroethane (FC-152a) and at least one aliphatic hydrocarbon compound or halogenated hydrocarbon compound having an atmospheric pressure boiling point of from 0°C to 50°C. Further where the mixture consists of FC-142b and the aliphatic hydrocarbon or halogenated hydrocarbon, the system must exhibit a saturated vapor pressure of from 1667.1—2059.4 kPa (17 to 21 kg/cm$^2$) at 100°C. A system comprising F-152a and an aliphatic hydrocarbon or a halogenated hydrocarbon must exhibit a saturated vapor pressure of from 2353.6—3138.1 kPa (24 to 32 kg/cm$^2$) at 100°C. Preferably, such mixed blowing agent systems contain from 5 to 40 (more preferably from 5 to 35, most preferably from 5 to 25 and especially 20) weight percent of the indicated 0°C to 50°C boiling point aliphatic hydrocarbon and/or halogenated hydrocarbon composition(s) with the remainder of the system being either FC-142b or FC-152a.

Such system(s) beneficially provide the use of blowing agents which do not harm the atmosphere. In addition, such new agents work well in combination with other volatile hydrocarbons. Dimensional stability is not sacrificed and a good cross-sectional size is maintained with fine cell size at both ambient and elevated temperatures. This is surprising particularly with low density polyethylene foams since the prior art teaches the use of highly chlorinated/fluorinated methane derivatives rather than ethane derivatives with lower fluoride/chloride content.

Suitable aliphatic hydrocarbon and halogenated hydrocarbon compounds for use in the mixed blowing agent system include n-butane, pentane, trichloromonofluoromethane (FC-11), trichlorotrifluoroethane, dichloromonofluoromethane, ethyl chloride, and 1-chloropropane. Preferred is ethyl chloride.

In practice, the amount of mixed blowing agent system employed will be dictated primarily by the desired foam density. However, the amount will typically be in the range of from 0.04 to 0.4 gram-mole of combined mixed blowing agent per 100 grams of olefin polymer resin.

In addition to the above ingredients, there may also be employed in the practice of the present invention other conventional ingredients or additives such as nucleating or cell-size controlling agents (e.g., talc, clay, mica, silica, titanium oxide, zinc oxide, calcium silicate, metallic salts of fatty acids, such as barium stearate, zinc stearate, aluminum stearate, etc.), and wetting agents.

The following examples, in which all parts and percentages are on a weight basis unless otherwise indicated, are illustrative of the present invention.

Example 1

The apparatus used in this example is a 3.18 cm (1.25 in) screw type extruder having additional zones for mixing and cooling at the end of the usual sequential zones for feeding, melting and metering. An opening for blowing agent injection is provided on the extruder barrel between metering and mixing zones. At the end of the cooling zone is a die orifice having a retangular opening 0.64 cm (0.25 in) wide and adjustable in height.

Granular polyethylene having a density of 0.921 g/cm$^3$ and a melt index of 2.3, talcum powder in an amount of 0.7 part by weight per 100 parts by weight of polyethylene, and a stearamide concentrate consisting of 25 percent by weight of Kemamide® S (trademark of Humko-Sheffield Chemical Company) produced by Humko-Sheffield Chemical Company and 75 percent by weight of polyethylene in an amount sufficient to provide a stearamide level of 1.0 part by weight per 100 parts by weight of total resin are uniformly premixed. A small amount of wetting agent is added to facilitate adhesion of the talcum powder to the polymer granules. The mixture is then fed into the extruder feeding zone at an essentially uniform rate of about 4.5 kg (10 pounds) per hour. The temperature maintained at the various extruder zones are approximately 140°C in the feeding zone, 180°C in the melting and metering zones and 150°C in the mixing zone.

A foaming agent mixture of FC-142b and ethyl chloride as shown in Table I was injected a stated rate. The temperature of the cooling zone was adjusted to reduce the temperature of the polymer/blowing agent mixture to a uniform extrusion temperature of about 108°C.

The resulting foam body with an approximately rectangular cross-section with rounded corners was conducted away from the die opening. The maximum achievable cross-section of foam body is determined by adjusting the die gap opening and observing the quality of the foam product. At die gap dimensions near those giving maximum foam cross-section, foam samples are saved to determine dimensional stability and physical properties of the foam. Dimensional stability at ambient temperature is tested on samples having a length of approximately 20 cm (8 in) by observing the minimum volume to which such samples shrink at ambient temperature. Foam sample volumes are determined by measuring the volume of water displaced by the foam samples when submerged in water. Typical results are summarized in Table I.

As seen in Table I, the maximum achievable cross-section increases with the level of ethyl chloride in the blowing agent mixture, while foam dimensional stability at both room temperature and high temperature in general deteriorates. Cell size also increases with the level of ethyl chloride making the foam appear coarse. The data shown in Table I indicates that a blowing agent system containing 10 to 30 percent of ethyl chloride provides the best balance between increased foam cross-sectional size and other important properties (e.g., cell size, dimensional stability at both room temperature and 65.6°C, etc.). Such blowing agent systems have at 100°C saturated vapor pressures in the range of from 2010.4—1745.6 kPa (20.5 to 17.8 kg/cm$^2$) and thus are representative of especially preferred embodiments of the present invention.

TABLE I

| Test No. | Blowing agent | | | Maximum cross-section (cm$^2$) (3) | Foam thickness (cm) (4) | Foam density (kg/m$^3$) (5) | Cell size (mm) (6) | Foam stability (%) | |
|---|---|---|---|---|---|---|---|---|---|
| | Type | Ratio (1) | Level (pph) (2) | | | | | Room temp. (7) | 65.6°C (150°F) (8) |
| I.1 | FC-142b | — | 13.4 | 7.10 | 2.77 | 34.6 | 1.25 | 94 | 79 |
| I.2 | FC-142b/EtCl | 90/10 | 12.7 | 7.74 | 2.90 | 34.6 | 1.08 | 95 | 80 |
| I.3 | FC-142b/EtCl | 80/20 | 12.8 | 7.87 | 2.84 | 35.4 | 1.25 | 92 | 81 |
| I.4 | FC-142b/EtCl | 70/30 | 11.2 | 9.55 | 3.12 | 34.6 | 1.62 | 82 | 70 |
| I.5 | FC-142b/EtCl | 60/40 | 11.3 | 8.84 | 3.00 | 35.8 | 1.62 | 78 | ND |
| I.6 | FC-142b/EtCl | 50/50 | 10.4 | 11.94 | 3.30 | 36.5 | 2.03 | 61 | ND |

Notes:

(1)=Weight ratio.

(2)=Parts of blowing agent mixed in per hundred parts of polymer.

(3)=Cross-sectional area of foam body in square cm produced at the critical die gap.

(4)=Thickness of foam body produced at the die gap indicated in (3).

(5)=Density of foam body in kg/m$^3$ measured within about five minutes after extrusion.

(6)=Cell size in horizontal direction determined per ASTM D-3576.

(7)=Minimum volume of foam body during aging at ambient temperature as percentage of initial volume measured within about five minutes after extrusion.

(8)=Volume of foam body as percentage of initial volume after aging foam samples at ambient temperature for approximately two weeks and than in an oven maintained at 65.6°C (150°F) for 24 hours.

ND=Not Determined.

EP 0 152 787 B1

Example 2

The extrusion apparatus of Example 1 is employed in this example with a polyethylene having a density of 0.921 g/cm$^3$ and a melt index of 2.0. Talcum powder is mixed in a 2.0 parts by weight per 100 parts by weight of polyethylene and sufficient stearamide concentrate added so that the level of stearamide became 5 parts per 100 parts by wieght of total polyethylene. The operating conditions were essentially the same as Example 1.

The data in Table II show that except for slightly improved foam dimensional stability, other properties follow a similar trend as in Example 1. Again, for processability and foam dimensional stability, an optimum blowing agent contains about 10 to 30 parts by weight of ethyl chloride in a mixture with FC-142b. Note that even at this high level of stearamide (5 pph) a mixture comprising 40 percent or more of ethyl chloride displays unacceptable dimensional stability. Test No. II.1 does not represent an example of the present invention.

TABLE II

| Test No. | Blowing agent | | | Maximum cross-section (cm$^2$) (3) | Foam thickness (cm) (4) | Foam density (kg/m$^3$) (5) | Cell size (mm) (6) | Foam stability (%) | |
|---|---|---|---|---|---|---|---|---|---|
| | Type | Ratio (1) | Level (pph) (2) | | | | | Room temp. (7) | 65.6°C (150°F) (8) |
| II.1 | FC-142b | — | 13.4 | 6.97 | 2.67 | 33.8 | 1.01 | 92 | 93 |
| II.2 | FC-142b/EtCl | 90/10 | 12.8 | 7.61 | 2.92 | 35.2 | 1.35 | 97 | 97 |
| II.3 | FC-142b/EtCl | 80/20 | 11.8 | 7.68 | 2.92 | 35.2 | 1.25 | 96 | 92 |
| II.4 | FC-142b/EtCl | 70/30 | 11.7 | 9.55 | 3.05 | 34.7 | 1.62 | 91 | 85 |
| II.5 | FC-142b/EtCl | 60/40 | 10.9 | 9.03 | 3.02 | 33.4 | 1.47 | 80 | 66 |
| II.6 | FC-142b/EtCl | 50/50 | 11.1 | 9.68 | 3.33 | 35.0 | 1.31 | 78 | 67 |

Notes: Same as Table I.

EP 0 152 787 B1

Example 3

The same apparatus and operating procedures were employed using FC-152a and ethyl chloride with 0.7 part of talc and 2.0 parts of stearamide per 100 parts of polymer. Compositions and test results are shown in Table III.

In Test III.1, FC-152a produced a very small cross-sectioned foam with an unacceptably fine cell size while in Test III.3 a 50/50 mixture of FC-152a/ethyl chloride gave poor dimensional stability. Test III.2 shows that a 75/25 mixture of FC-152a/ethyl chloride results in an adequate foam cross-section and acceptable, though marginal, dimensional stability.

Data such as shown in Table III indicate that a blowing agent system containing 10 to 25 percent of ethyl chloride provides the best balance between increased foam cross-sectional size and other important properties (e.g., cell size, dimensional stability at both room temperature and 65.6°C, etc.). Such blowing agent systems have at 100°C saturated vapor pressures in the range of from 2942.0—2451.7 kPa (30 to 25 kg/cm$^2$) and thus are representative of especially preferred embodiments of the present invention.

EP 0 152 787 B1

TABLE III

| Test No. | Blowing agent | | | Maximum cross-section (cm²) (3) | Foam thickness (cm) (4) | Foam density (kg/m³) (5) | Cell size (mm) (6) | Foam stability (%) | |
|---|---|---|---|---|---|---|---|---|---|
| | Type | Ratio (1) | Level (pph) (2) | | | | | Room temp. (7) | 65.6°C (150°F) (8) |
| III.1 | FC-152a | — | 8.6 | 4.06 | 1.78 | 35.7 | 0.52 | 99 | ND |
| III.2 | FC-152a/EtCl | 75/25 | 8.8 | 7.35 | 2.64 | 35.8 | 1.62 | 81 | 69 |
| III.3 | FC-152a/EtCl | 50/50 | 10.1 | 10.97 | 3.35 | 36.3 | 2.31 | 69 | ND |

Notes: Same as Table I.

## EP 0 152 787 B1

**Claims**

1. A process for preparing closed-cell olefin polymer foamed articles having increased maximum achievable cross-sectional areas and having good dimensional stability comprising the steps of:
   (A) heat plastifying a normally solid olefin polymer resin;
   (B) admixing said heat plastified resin under elevated temperature and pressure with
   (1) a stability control agent and
   (2) a mixed blowing agent system selected from (a) or (b) or (c);
   (a) from 50 to 95 weight percent of 1-chloro-1,1-difluoroethane and from 5 to 50 weight percent of an aliphatic hydrocarbon composition or a halogenated hydrocarbon composition or a mixture thereof such aliphatic and/or halogenated hydrocarbon composition(s) having a normal atmospheric boiling point of from 0°C to 50°C, the system having a saturated vapor pressure of 1667.1—2059.4 kPa (17 to 21 kg/cm$^2$) at 100°C;
   (b) from 50 to 95 weight percent of 1,1-difluoroethane and from 5 to 50 weight percent of an aliphatic hydrocarbon composition or halogenated hydrocarbon compositions or a mixture thereof, such aliphatic and/or halogenated hydrocarbon composition(s) having a normal atmospheric boiling point of from 0°C to 50°C, the system having a saturated vapor pressure of 2353.6—3138.1 kPa (24 to 32 kg/cm$^2$) at 100°C;
   (c) a mixture of (a) and (b); the weight percentages of the components in the mixed blowing agent systems being based on the total weight of the mixed blowing agent system,
   (C) extruding the resultant resin, stability control agent and blowing agent mixture into a zone of lower temperature and pressure; and
   (D) cooling the mixture to thereby form an olefin polymer foam.

2. The process of Claim 1 wherein the mixed blowing agent system consists essentially of from 5 to 40 weight percent of said aliphatic hydrocarbon and/or halogenated hydrocarbon composition(s) and from 60 to 95 weight percent of 1-chloro-1,1-difluoroethane or 1,1-difluoroethane.

3. The process of claim 2 wherein the halogenated hydrocarbon is ethyl chloride.

4. The process of claim 1 wherein the olefin polymer is a homopolymer of ethylene, a copolymer thereof with up to 50 weight percent of vinyl acetate, propylene, butene-1, butadiene, vinyl chloride, methyl methacrylate, acrylonitrile or a copolymer of ethylene with up to 50 weight percent of acrylic acid.

5. The process of Claim 1 wherein the olefin polymer is polyethylene and the stability control agent is stearamide in an amount from 0.1 to 10 weight percent based on the olefin polymer.

6. The process of Claim 1 wherein the blowing agent is a mixture of 60 to 95 weight percent 1-chloro-1,1-difluoroethane and 40 to 5 weight percent ethyl chloride.

7. The process of Claim 1 wherein the blowing agent is a mixture of 75 to 90 weight percent 1,1-difluoroethane and 25 to 10 weight percent ethyl chloride.

8. The process of Claim 1 wherein the olefin foam has a density of from 16 to 96 kg/m$^3$ and the mixed blowing agent is employed in an amount of from 0.04 to 0.4 gram-moles per 100 grams olefin polymer.

9. The process of Claim 1 wherein the stability control agent is one or more compounds selected from the group consisting of saturated higher fatty acid amides, higher alkyl amines, complete esters of polyhydric alcohols with saturated higher fatty acids, alkyl substituted amides of unsaturated fatty acids, and alkenyl substituted amides of saturated fatty acids.

10. The process of Claim 1 wherein the stability control agent is a saturated higher fatty acid amide.

11. The process of Claim 1 wherein the mixed blowing agent system consists essentially of from about 5 to about 25 weight percent of said aliphatic hydrocarbon and/or halogenated hydrocarbon composition(s) and from about 75 to about 95 weight percent of one compound selected from the group consisting of 1-chloro-1,1-difluoroethane and 1,1-difluoroethane.

**Patentansprüche**

1. Verfahren zur Herstellung von Gegeständen aus geschäumtem, geschlossenzelligen Olefinpolymerisat mit vergrößerten maximal erzielbaren Querschnitten und guter dimensionaler Stabilität, das Schritte umfaßt, bei denen
   (A) ein normalerweise festes Olefinpolymerisatharz durch Wärme plastifiziert wird,
   (B) das Wärmeplastifizierte Harz bei erhöhter Temperatur und erhöhtem Druck vermischt wird mit
   (1) einem stabilitätssteuernden Mittel und
   (2) einem Mischtreibmittelsystem das ausgewählt ist aus (a) oder (b) oder (c);
   (a) von 30 bis 95 Gewichtsprozent 1-Chlor-1,1-difluorethan und von 5 bis 50 Gewichtsprozent einer aliphatischen Kohlenwasserstoffzusammensetzung oder einer halogenierten Kohlenwasserstoffzusammensetzung oder einer Mischung daraus, wobei diese aliphatische und/oder halogenierte Kohlenwasserstoffzusammensetzung(en) einen normalen atmosphärischen Siedepunkt von 0°C bis 50°C aufweisen und das System einen Sättigungsdampfdruck von 1667,1—2059,4 kPa (17 bis 21 kg/cm$^2$) bei 100°C aufweist,
   (b) von 50 bis 95 Gewichtsprozent 1,1-Difluorethan und von 5 bis 50 Gewichtsprozent einer aliphatischen Kohlenwasserstoffzusammensetzung oder halogenierten Kohlenwasserstoffzusammensetzungen oder einer Mischung daraus, wobei diese aliphatische und/oder halogenierten Kohlenwasserstoffzusammensetzung(en) einen normalen atmosphärischen Siedepunkt von 0°C. bis 50°C aufweisen und das System einen Sättigungsdampfdruck von 2353,6—3138,1 kPa (26 bis 32 kg/cm$^2$) bei 100°C aufweist,

(c) einer Mischung aus (a) und (b), wobei die Gewichtsprozente der Bestandteile in den Mischtreibmittelsystemen bezogen sind auf das Gesamtgewicht des Mischtreibmittelsystems,

(C) die erhaltene Mischung aus dem Harz, dem stabilitätssteuernden Mittel und dem Treibmittel in eine Zone niederer Temperatur und niederen Druckes extrudiert wird und

(D) die Mischung zum Bilden eines Olefinpolymerisatschaumes abgekühlt wird.

2. Verfahren nach Anspruch 1, bei dem das Mischtreibmittelsystem im wesentlichen aus von 5 bis 40 Gewichtsprozent der aliphatischen Kohlenwasserstoff- und/oder halogenierten Kohlenwasserstoffzusammensetzung(en) und von 60 bis 95 Gewichtsprozent 1-Chlor-1,1-diffuorethan oder 1,1-Difluorethan besteht.

3. Verfahren nach Anspruch 2, bei dem der halogenierte Kohlenwasserstoff aus Ethylchlorid besteht.

4. Verfahren nach Anspruch 1, bei dem das Olefinpolymerisat ein Homopolymerisat des Ethylens, ein Copolymerisat dessen mit bis zu 50 Gewichtsprozent Vinylacetat, Propylen, Buten-1, Butadien, Vinylchlorid, Methylmethacrylat, Acrylnitril oder ein Copolymerisat des Ethylens mit bis zu 50 Gewichtsprozent Acrylsäure ist.

5. Verfahren nach Ansrpuch 1, bei dem das Olefinpolymerisat Polyethylen ist und das stabilitätssteuernde Mittel ein Stearamid in einer Menge von 0,1 bis 10 Gewichtsprozent, bezogen auf das Olefinpolymerisat, ist.

6. Verfahren nach Anspruch 1, bei dem das Triebmittel eine Mischung aus 60 bis 95 Gewichtsprozent 1-Chlor-1,1-difluorethan und 40 bis 5 Gewichtsprozent Ethylchlorid ist.

7. Verfahren nach Anspruch 1, bei dem das Treibmittel eine Mischung aus 75 bis 90 Gewichtsprozent 1,1-Difluorethan und 25 bis 10 Gewichtsprozent Ethylchlorid ist.

8. Verfahren nach Anspruch 1, bei dem der Olefinschaum eine Dichte von 16 bis 96 kg/m$^3$ aufweist und das Mischtreibmittel in einer Menge von 0,04 bis 0,4 Gramm-Molekülen pro 100 Gramm des Olefinpolymerisats eingesetzt wird.

9. Verfahren nach Anspruch 1, bei dem das stabilitätssteuernde Mittel eines oder mehrere der Verbindungen ist, die ausgewählt sind aus der Gruppe bestehend aus Amiden gesättigter höherer Fettsäuren, höheren Alkylaminen, Vollestern mehrwertiger Alkohole mit gesättigten höheren Fettsäuren, alkylsubstituierten Amiden ungesättigter Fettsäuren und alkenylsubstituierten Amiden gesättigter Fettsäuren.

10. Verfahren nach Anspruch 1, bei dem das stabilitätssteuernde Mittel ein Amid einer gesättigten höheren Fettsäure ist.

11. Verfahren nach Anspruch 1, bei dem das Mischtreibmittelsystem im wesentlichen aus etwá 5 bis etwa 25 Gewichtsprozent der aliphatischen Kohlenwasserstoff- und/oder halogenierten Kohlenwasserstoffzusammensetzung(en) und etwa 75 bis etwa 95 Gewichtsprozent einer Verbindung besteht, die ausgewählt ist aus der Gruppe bestehend aus 1-Chlor-1,1-difluorethan und 1,1-Difluorethan.

## Revendications

1. Procédé pour préparer des articles expansés a base de polymères oléfiniques, à alvéoles fermés, présentant une aire transversale maximale possible plus élevée, et présentant une bonne stabilité dimensionnelle comprenant les étapes consistant:

(A) à plastifier à la chaleur une résine normalement solide à base d'un polymère oléfinique:

(B) à ajouter à ladite résine plastifiée à chaud dans des conditions élevées de température et de pression

(1) un agent de régulation de stabilité, et

(2) un système mixte d'agents d'expansion choisi entre (a), (b) ou (c):

(a) de 50 à 95% en poids de 1-chloro-1,1-difluoréthane et de 5 à 50% en poids d'une composition d'hydrocarbure aliphatique ou d'une composition d'hydrocarbure halogénée, ou d'un de leurs mélanges, cette ou ces compositions d'hydrocarbures aliphatiques et/ou halogénés ayant un point d'ébullition, sous la pression atmosphérique normale, de 0 à 50°C, le système ayant une pression de vapeur saturante de 1667,1—2059,4 kPa (17 à 21 kg/cm$^2$) à 100°C;

(b) de 50 à 95% en poids de 1,1-difluoroéthane et de 5 à 50% en poids d'une composition d'hydrocarbure aliphatique ou de compositions d'hydrocarbures halogénés, ou d'un de leurs mélanges, ladite ou lesdites compositions d'hydrocarbures aliphatiques et/ou halogénés ayant un point d'ébullition, sous la pression atmosphérique normale, de 0 à 50°C, le système ayant une pression de vapeur saturante de 2353,6—3138,1 kPa (24 à 32 kg/cm$^2$) à 100°C;

(c) un mélange de (a) et de (b);

les pourcentages pondéraux des composants, dans les systèmes mixtes d'agents d'expansion, étant déterminés par rapport au poids total du système mixte d'agents d'expansion;

(C) à extruder le mélange obtenu de la résine, de l'agent régulateur de stabilité et du mélange d'agents d'expansion, dans une zone à température et pression plus faibles; et

(D) à refroidir le mélange pour former ainsi une mousse à base d'un polymère oléfinique.

2. Procédé selon la revendication 1, dans lequel le système mixte d'agents d'expansion est constitue essentiellement de 5 à 40% en poids de ladite ou desdites compositions d'hydrocarbures aliphatiques et/ou d'hydrocarbures halogénés, et de 60 à 95% en poids de 1-chloro-1,1-difluoréthane ou de 1,1-difluoréthane.

3. Procédé selon la revendication 2, dans lequel l'hydrocarbure halogéné est le chlorure d'éthyle.

4. Procédé selon la revendication 1, dans lequel le polymère olifinique est un homopolymère de l'éthylène, un de ses copolymères avec jusqu'à 50% en poids d'acétate de vinyle, de propylène, de butène-1, de butadiène, de chlorure de vinyle, de méthacrylate de méthyle, d'acrylonitrile, ou encore un copolymère de l'éthylène avec jusqu'à 50% en poids d'acide acrylique.

5. Procédé selon la revendication 1, dans lequel le polymère oléfinique est le polyéthylène, et l'agent régulateur de stabilité est le stéaramide, en une quantité de 0,1 à 10% en poids par rapport au polymère oléfinique.

6. Procédé selon la revendication 1, dans lequel l'agent d'expansion est un mélange de 60 à 95% en poids de 1-chloro-1,1-difluoréthane et de 40 à 5% en piods de chlorure d'éthyle.

7. Procédé selon la revendication 1, dans lequel l'agent d'expansion est un mélange de 75 à 90% en poids de 1,1-difluoroéthane et de 25 à 10% en poids de chlorure d'éthyle.

8. Procédé selon la revendication 1, dans lequel la mousse oléfinique a une masse volumique de 16 à 96 kg/m$^3$ et l'agent d'expansion mixte est utilisé en une quantité de 0,04 à 0,4 mole-grammes pour 100 g du polymère oléfinique.

9. Procédé selon la revendication 1, dans lequel l'agent régulateur de stabilité est constitué d'un ou plusieurs composés choisis dans le groupe comprenant les amides d'acides gras supérieurs saturés, les alkylaminés supérieures, les esters complets de polyalcools et d'acides gras supérieurs saturés, les amides, substitués par des radicaux alkyle, d'acides gras insaturés, et les amides, substitués par des radicaux alcényle, d'acides gras saturés.

10. Procédé selon la revendication 1, dans lequel l'agent régulateur de stabilité est un acide d'un acide gras supérieur saturé.

11. Procédé selon la revendication 1, dans lequel le système mixte d'agents d'expansion est constitué essentiellement d'environ 5 à environ 25% en piods de ladite ou desdites compositions d'hydrocarbures aliphatiques et/ou d'hydrocarbures halogénés, et d'environ 75 à environ 95% en poids d'un composé choisi dans le groupe comprenant le 1-chloro-1,1-difluoréthane et le 1,1-difluoréthane.